# EUROPEAN PATENT APPLICATION

(11) **EP 4 711 639 A1**
(43) Date of publication of application: **18.03.2026**
(21) Application number: 24803326.8
(22) Date of filing: 10.04.2024
(51) Int. Cl.: F16F 9/516, F16F 9/32, F16F 9/58

(54) **SHOCK ABSORBER**

(30) Priority: 09.05.2023 JP 2023077094
(71) Applicant: KYB Motorcycle Suspension Co., Ltd., Kani-shi, Gifu 509-0297 (JP)
(72) Inventor: AKIMOTO, Masanobu, Kani-shi, Gifu 509-0297 (JP); JINNOUCHI, Takahiko, Kani-shi, Gifu 509-0297 (JP)
(74) Representative: MFG Patentanwälte Meyer-Wildhagen Meggle-Freund Gerhard PartG mbB
(86) International application number: PCT/JP2024/014523
(87) International publication number: WO 2024/232211

(57) **Abstract**

A shock absorber (D) includes: a cylinder (1); a piston rod (2); a piston (3) that partitions the inside of the cylinder (1) into an extension side chamber (R1) and a compression side chamber (R2); a bypass passage (40) provided in the piston rod (2) and bypassing an extension side damping valve (7) and a compression side damping valve (8); a damping force adjustment valve (41); a sub-cylinder (4) that is housed in the compression side chamber (R2) and forms a hydraulic pressure lock chamber (L) and a compensation chamber (R); a lock piece (31); and a closing body (6), in which the compensation chamber (R) includes a gas chamber (G) and a liquid chamber (A) communicating with the compression side chamber (R2), the bypass passage (40) includes a longitudinal hole (2d), and the closing body (6) closes an opening of the longitudinal hole (2d).

## Description

### Technical Field

The present invention relates to a shock absorber.

### Background Art

For example, as disclosed in JP 2019-215040 A, a shock absorber includes: a cylinder; a piston rod that is movably inserted into the cylinder; a piston that is connected to the piston rod, is movably inserted into the cylinder, and partitions the inside of the cylinder into an extension side chamber and a compression side chamber filled with hydraulic oil; a piston rod that is movably inserted into the cylinder and connected to the piston; a free piston that is movably inserted into the cylinder in an axial direction and forms a gas chamber facing the compression side chamber in the cylinder; an extension side leaf valve that opens and closes an extension side passage provided in the piston; and a compression side leaf valve that opens and closes a compression side passage provided in the piston, and the shock absorber is interposed between a vehicle body and a rear wheel of a straddle-type vehicle to generate a damping force that suppresses vibration of the vehicle body during extension and contraction.

Further, in order to make it possible to adjust the damping force generated during the extension and contraction, the shock absorber according to the related art includes a bypass passage opened from a distal end of the piston rod that faces the compression side chamber, and bypassing the extension side passage and the compression side passage through the extension side chamber, and a needle valve that is provided in the bypass passage and can adjust a passage area.

### Citation List

### Patent Literature

Patent Literature 1: JP 2019-215040 A

### Summary of Invention

### Technical Problem

In the shock absorber according to the related art, when the piston contracts to move so as to compress the compression side chamber with respect to the cylinder, the compression side leaf valve that opens and closes the compression side passage provided in the piston is opened and the hydraulic oil moves from the compression side chamber to the extension side chamber. Therefore, a difference occurs between a pressure of the compression side chamber and a pressure of the extension side chamber, and a compression side damping force that suppresses the contraction can be generated.

In such a shock absorber according to the related art, the compression side damping force can be generated and the vibration of the vehicle body can be suppressed. However, in a case where the vehicle is forced to travel on a rough road in an area where road improvement has not progressed or the like, when the shock absorber contracts to the vicinity of a stroke end, the shock absorber may be required to generate the compression side damping force larger than before.

In order to meet such a demand, it is necessary to increase the pressure of the compression side chamber during the contraction of the shock absorber. However, in a structure of the shock absorber according to the related art, the gas chamber faces the compression side chamber via the free piston, and the pressure of the compression side chamber cannot be increased to be equal to or higher than a pressure of the gas chamber. Therefore, there is a limit to increasing the compression side damping force. In addition, an opening degree of the needle valve is generally adjusted by a manual operation of a user. Therefore, in the shock absorber according to the related art, the compression side damping force cannot be increased only when the shock absorber contracts up to the stroke end.

In this regard, an object of the present invention is to provide a shock absorber capable of adjusting a damping force and generating a large damping force in the vicinity of a stroke end.

### Solution to Problem

In order to solve the above problems, a shock absorber according to the present invention includes: a cylinder; a piston rod that is movably inserted into the cylinder in an axial direction; a piston that is connected to the piston rod, is movably inserted into the cylinder in the axial direction, and partitions an inside of the cylinder into an extension side chamber and a compression side chamber; an extension side damping valve that applies a resistance to a flow of a liquid from the extension side chamber to the compression side chamber; a compression side damping valve that applies a resistance to a flow of the liquid from the compression side chamber to the extension side chamber; a bypass passage that is provided in the piston rod, bypasses the extension side damping valve and the compression side damping valve, and allows the extension side chamber and the compression side chamber to communicate with each other; a damping force adjustment valve provided in the bypass passage; a sub-cylinder housed in the compression side chamber in the cylinder; a partition wall that partitions an inside of the sub-cylinder into a hydraulic pressure lock chamber and a compensation chamber on a counter piston side of the hydraulic pressure lock chamber; a lock piece that has a hole and is movably inserted into the hydraulic pressure lock chamber in the axial direction in the sub-cylinder; and a closing body that is provided at a distal end of the piston rod and closes the hole when abutting on the lock piece, in which the compensation chamber includes a gas chamber and a liquid chamber communicating with the compression side chamber, the bypass passage is formed to include a longitudinal hole that is opened from the distal end of the piston rod, a first lateral hole that is opened from a side of the piston rod and allows the compression side chamber and the longitudinal hole to communicate with each other, and a second lateral hole that is opened from the side of the piston rod and allows the extension side chamber and the longitudinal hole communicate with each other, and the closing body closes an opening of the longitudinal hole of the piston rod.

In the shock absorber configured as described above, during contraction, when the piston rod moves in a contraction direction, and the closing body abuts on the lock piece, the hole of the lock piece is closed by the closing body, and the lock piece is pushed into the hydraulic pressure lock chamber. Therefore, a pressure of the hydraulic pressure lock chamber increases, and a resistance force for suppressing the movement of the piston rod can be added to a damping force during the contraction.

### Brief Description of Drawings

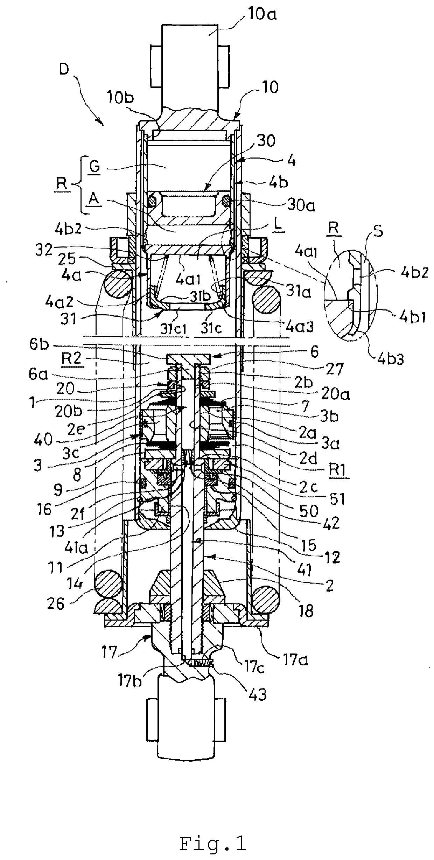

Fig. 1 is a cross-sectional view of a shock absorber according to one embodiment.

### Description of Embodiments

The present invention will be described based on an embodiment illustrated in the drawing. As illustrated in Fig. 1, a shock absorber D according to one embodiment includes a cylinder 1, a piston rod 2 that is movably inserted into the cylinder 1 in an axial direction, a piston 3 that is connected to the piston rod 2, is movably inserted into the cylinder 1 in the axial direction, and partitions the inside of the cylinder 1 into an extension side chamber R1 and a compression side chamber R2, an extension side leaf valve 7 serving as an extension side damping valve that applies a resistance to a flow of a liquid from the extension side chamber R1 to the compression side chamber R2, a compression side leaf valve 8 serving as a compression side damping valve that applies a resistance to a flow of the liquid from the compression side chamber R2 to the extension side chamber R1, a bypass passage 40 that is provided in the piston rod 2, bypasses the extension side leaf valve 7 and the compression side leaf valve 8, and allows the extension side chamber R1 and the compression side chamber R2 to communicate with each other, a needle valve 41 serving as a damping force adjustment valve provided in the bypass passage 40, a sub-cylinder 4 housed in the compression side chamber R2 in the cylinder 1, a partition wall 4a1 that partitions the inside of the sub-cylinder 4 into a hydraulic pressure lock chamber L and a compensation chamber R on a counter piston side of the hydraulic pressure lock chamber L, a lock piece 31 that is movably inserted into the hydraulic pressure lock chamber L in the axial direction, a spring 32 that is interposed between the lock piece 31 and the partition wall 4a1 to bias the lock piece 31 toward a piston side, and a closing body 6 that is provided at a distal end of the piston rod 2. Although not illustrated, the shock absorber D is interposed, for example, between a vehicle body and a rear wheel in a straddle-type vehicle such as a motorcycle and generates a damping force during extension and contraction to suppress vibration of the vehicle body. Note that the shock absorber D may be used for vehicles other than the straddle-type vehicle or may be used for equipment other than the vehicle, buildings, and the like.

Each parts of the shock absorber D will be described in detail below. An upper end opening edge of the cylinder 1 is closed by a cap 10 that has a tubular shape and is attached to an upper end in Fig. 1. The cap 10 includes a bracket 10a that closes the upper end opening edge of the cylinder 1 and enables connection to the vehicle body of the straddle-type vehicle. A rod guide 11 that has an annular shape and through which the piston rod 2 is inserted is fitted to an inner periphery of a lower end of the cylinder 1 in Fig. 1, and a bump stopper 12 having an annular shape is attached to an opening end of the lower end of the cylinder 1 in Fig. 1. The rod guide 11 is restricted, by a stop ring 13 attached to the inner periphery of the cylinder 1, from moving from the inside of the cylinder 1 downward in Fig. 1, that is, outward from the inside of the cylinder 1, and the rod guide 11 is positioned at a position at which the rod guide 11 is pressed downward in Fig. 1 by a pressure of the liquid in the cylinder 1 and abuts on the stop ring 13. In addition, a tubular bush 14 that is slidably in contact with an outer periphery of the piston rod 2 and a seal ring 15 that is slidably in contact with the outer periphery of the piston rod 2 to seal the outer periphery of the piston rod 2 are placed on the inner periphery of the rod guide 11, and a seal ring 16 that is in close contact with the inner periphery of the cylinder 1 to seal between the cylinder 1 and the rod guide 11 is placed on an outer periphery of the rod guide 11.

In addition, an upper spring seat 25 having an annular shape is screwed to an outer periphery of the cylinder 1 on the upper side in Fig. 1. When the upper spring seat 25 is rotationally operated with respect to the cylinder 1, the upper spring seat 25 can be displaced in a vertical direction in Fig. 1, which is the axial direction with respect to the cylinder 1.

The piston rod 2 is movably inserted into the cylinder 1 in the axial direction via the inner peripheries of the bump stopper 12 and the rod guide 11, and the piston 3 movably inserted into the cylinder 1 in the axial direction is connected to the distal end of the piston rod 2. The piston rod 2 includes a small-diameter portion 2a which is provided at an upper end in Fig. 1 as the distal end and to which the piston 3 is attached on the outer periphery thereof, a screw portion 2b which is provided on an outer periphery of an upper end of the small-diameter portion 2a, a step portion 2c which is formed between the small-diameter portion 2a and a portion below the small-diameter portion 2a, a longitudinal hole 2d which is opened from the distal end and extends to a proximal end, a first lateral hole 2e which is opened from a side of the small-diameter portion 2a and extends to the longitudinal hole 2d, and a second lateral hole 2f which is opened from a portion below the step portion 2c and extends to the longitudinal hole 2d.

In the shock absorber D of the present embodiment, the piston rod 2 has a tubular shape with the longitudinal hole 2d provided over the entire length. A tubular valve seat member 42 is attached to the piston rod 2 on an upper side that is slightly more toward the distal end than an opening of the second lateral hole 2f in the longitudinal hole 2d.

In addition, a bracket 17 capable of connecting the piston rod 2 to a swing arm supporting the rear wheel of the straddle-type vehicle (not illustrated) is attached to a lower end of the piston rod 2 in Fig. 1, and a bump cushion rubber 18 placed above the bracket 17 is fitted to an outer periphery of the lower end of the piston rod 2. The bump cushion rubber 18 faces the bump stopper 12, which is attached to the lower end of the cylinder 1 in Fig. 1, in the axial direction, and when the shock absorber D strokes toward a contraction side to the vicinity of a stroke end, the bump cushion rubber 18 abuts on the bump stopper 12, is compressed, and exerts a resilient force that suppresses a further stroke of the shock absorber D in a contraction direction to mitigate an impact at the time of the maximum contraction of the shock absorber D.

The bracket 17 includes a lower spring seat 17a on an outer periphery thereof, and a suspension spring 26 formed of a coil spring is interposed between the lower spring seat 17a and the upper spring seat 25 attached to the outer periphery of the cylinder 1. The suspension spring 26 biases so as to separate the cylinder 1 and the piston rod 2 from each other in the axial direction, that is, to extend the shock absorber D, and the suspension spring 26 elastically supports the vehicle body by exerting a resilient force when the shock absorber D is interposed between the vehicle body and the rear wheel of the straddle-type vehicle. Since an installation position of the upper spring seat 25 with respect to the cylinder 1 can be changed in the axial direction, a vehicle height of the straddle-type vehicle can be adjusted by changing an initial load applied to the suspension spring 26.

A valve stopper 9, the annular compression side leaf valve 8, the annular piston 3, the annular extension side leaf valve 7, and a collar 20 are sequentially assembled to the small-diameter portion 2a of the piston rod 2. The compression side leaf valve 8, the piston 3, and the extension side leaf valve 7 are clamped by a piston nut 27 screwed to the screw portion 2b at a distal end of the small-diameter portion 2a and the step portion 2c of the piston rod 2, and are fixed to the small-diameter portion 2a of the piston rod 2.

The piston 3 includes a piston ring 3a that is provided on the outer periphery thereof and is slidably in contact with the inner periphery of the cylinder 1, and partitions the inside of the cylinder 1 into the extension side chamber R1 and the compression side chamber R2 that are filled with the liquid. Further, the piston 3 includes an extension side passage 3b and a compression side passage 3c that allow the extension side chamber R1 and the compression side chamber R2 to communicate with each other. Note that the liquid filling the extension side chamber R1 and the compression side chamber R2 is, for example, the hydraulic oil, but liquids other than the hydraulic oil can also be used.

The compression side leaf valve 8 serving as the compression side damping valve is a stacked leaf valve formed by stacking a plurality of annular shape plates, and is stacked at a lower end of the piston 3 in Fig. 1 in a state in which an inner periphery is fixed to the piston rod 2 and deflection on an outer peripheral side is allowed. The compression side leaf valve 8 closes the compression side passage 3c when stacked on the piston 3, and opens the compression side passage 3c when deflected by receiving the pressure of the compression side chamber R2 acting through the compression side passage 3c. When the compression side leaf valve 8 is greatly deflected, the valve stopper 9 abuts on a back surface of the compression side leaf valve 8 to restrict further deflection of the compression side leaf valve 8, thereby protecting the compression side leaf valve 8. The compression side damping valve may be a valve other than the compression side leaf valve 8 as long as the valve is capable of applying the resistance to the flow of the liquid passing through the compression side passage 3c, and may be an orifice or a choke in addition to the valve capable of opening and closing the compression side passage 3c.

On the other hand, the extension side leaf valve 7 serving as the extension side damping valve is a stacked leaf valve formed by stacking a plurality of annular shape plates, and is stacked at an upper end of the piston 3 in Fig. 1 in a state in which an inner periphery is fixed to the piston rod 2 and deflection on an outer peripheral side is allowed. The extension side leaf valve 7 closes the extension side passage 3b when stacked on the piston 3, and opens the extension side passage 3b when deflected by receiving the pressure of the extension side chamber R1 acting through the extension side passage 3b. The extension side damping valve may be a valve other than the extension side leaf valve 7 as long as the valve is capable of applying the resistance to the flow of the liquid passing through the extension side passage 3b, and may be an orifice or a choke in addition to the valve capable of opening and closing the extension side passage 3b.

The collar 20 has an annular shape, is fitted to the outer periphery of the small-diameter portion 2a of the piston rod 2, and includes a diameter enlarging portion 20a whose inner diameter of a lower side in Fig. 1 is larger than an outer diameter of the small-diameter portion 2a, and a notch 20b penetrating through a wall of the diameter enlarging portion 20a in a radial direction.

When the collar 20 is assembled to the small-diameter portion 2a of the piston rod 2 together with the valve stopper 9, the compression side leaf valve 8, the piston 3, and the extension side leaf valve 7, an inner periphery of the diameter enlarging portion 20a faces the first lateral hole 2e, and the first lateral hole 2e communicates with the compression side chamber R2 through the notch 20b.

The respective components including the valve stopper 9, the compression side leaf valve 8, the piston 3, the extension side leaf valve 7, and the collar 20, which are sequentially assembled from below to the outer periphery of the small-diameter portion 2a of the piston rod 2, are clamped between the piston nut 27 screwed to the screw portion 2b and the step portion 2c and fixed to the small-diameter portion 2a of the piston rod 2. In this manner, in a state in which each component including the piston 3 assembled to the small-diameter portion 2a is fixed to the piston rod 2 by the piston nut 27, the piston nut 27 is screwed to the piston rod 2 at a position below the upper end that is the distal end of the piston rod 2, that is, a position on a counter sub-cylinder side.

The closing body 6 is press-fitted into the longitudinal hole 2d of the piston rod 2. The closing body 6 includes a columnar insertion shaft 6a press-fitted into the longitudinal hole 2d, and a disc-shaped head portion 6b having a larger diameter than the insertion shaft 6a and provided on a sub-cylinder side of the insertion shaft 6a. When the insertion shaft 6a is press-fitted into the longitudinal hole 2d of the piston rod 2 until a lower end of the head portion 6b in Fig. 1 abuts on a distal end surface of the piston rod 2, the closing body 6 closes an upper end of the longitudinal hole 2d in Fig. 1, and the insertion shaft 6a is disposed at a position facing the piston nut 27 in the radial direction in the longitudinal hole 2d and is fixed to the piston rod 2. Therefore, the insertion shaft 6a of the closing body 6 enlarges an outer diameter of a portion of the screw portion 2b to which the piston nut 27 is screwed, so that slackening of the piston nut 27 screwed to the screw portion 2b is prevented. In this manner, the closing body 6 closes an opening edge at the upper end of the longitudinal hole 2d and also functions as a slackening prevention portion for the piston nut 27. A length of the insertion shaft 6a is set so as not to close the first lateral hole 2e in a state where the head portion 6b abuts on the distal end of the piston rod 2, but to face the piston nut 27 in the radial direction.

Since the head portion 6b of the closing body 6 abuts on the upper end serving as a sub-cylinder-side end of the piston rod 2 and a lower end surface of the head portion 6b faces an upper end surface of the piston nut 27 with a gap therebetween, the head portion 6b does not interfere with the piston nut 27. A surface of an upper end surface of the closing body 6 in Fig. 1, which abuts on a seat portion 31c of the lock piece 31 described below, is a flat flush surface.

Further, the longitudinal hole 2d of the piston rod 2 communicates with the extension side chamber R1 and the compression side chamber R2 through the first lateral hole 2e and the second lateral hole 2f, and forms, together with the first lateral hole 2e and the second lateral hole 2f, the bypass passage 40 that bypasses the extension side passage 3b and the compression side passage 3c in the piston 3 fixed to the outer periphery of the small-diameter portion 2a of the piston rod 2 and allows the extension side chamber R1 and the compression side chamber R2 to communicate with each other. The rod guide 11 is provided with a shutter 50 that is slidably in contact with the side surface of the piston rod 2 and closes the second lateral hole 2f, and an annular cushion 51 that abuts on the valve stopper 9 when the shock absorber D extends to the vicinity of the stroke end. At the time of maximum extension of the shock absorber D, the bypass passage 40 is closed by the shutter 50, and a gap on an inner side of the cushion 51 is closed, so that a pressure in the gap is increased to suppress further extension of the shock absorber D.

The needle valve 41 is housed so as to be movable in the axial direction in the longitudinal hole 2d of the piston rod 2 and below the valve seat member 42 in Fig. 1. The needle valve 41 is slidably inserted into the piston rod 2, and includes a conical valve head 41a that can enter and leave the valve seat member 42 at an upper end in Fig. 1.

The needle valve 41 can cut off the bypass passage 40 when the valve head 41a is seated on an inner periphery of a lower end of the valve seat member 42, open the bypass passage 40 when the valve head 41a is separated from the valve seat member 42, and adjust an area of the passage between the needle valve 41 and the valve seat member 42 by moving closer to or away from the valve seat member 42. A lower end which is a rear end of the needle valve 41 has a conical shape, protrudes downward from an opening of the longitudinal hole 2d at the proximal end of the piston rod 2, and protrudes into a hole 17b provided inside the bracket 17.

In addition, the bracket 17 includes a screw hole 17c that is opened from a side, communicates with the hole 17b, and has an axis orthogonal to an axis of the needle valve 41, and an adjustment bolt 43 having a conical distal end that abuts on the rear end of the needle valve 41 is attached to the screw hole 17c. Therefore, when the adjustment bolt 43 is rotationally operated to move the distal end of the adjustment bolt 43 so as to enter the hole 17b, the needle valve 41 is pushed by the distal end of the adjustment bolt 43 and moves upward in Fig. 1 in the piston rod 2, and the valve head 41a approaches the valve seat member 42, so that the area of the passage can be reduced. Conversely, when the adjustment bolt 43 is rotationally operated to move the distal end of the adjustment bolt 43 so as to exit from the hole 17b, the needle valve 41 moves downward in Fig. 1 with respect to the piston rod 2, and the valve head 41a can be separated from the valve seat member 42, so that the area of the passage can be increased.

As described above, the needle valve 41 can move in the vertical direction in the longitudinal hole 2d of the piston rod 2 by the operation of the adjustment bolt 43, and can open and close the bypass passage 40 and adjust the area of the passage when opened. In addition to the needle valve 41, the damping force adjustment valve may be a poppet valve or any other valve capable of adjusting the damping force.

Then, after the sub-cylinder 4 is fitted to an outer periphery of a protrusion 10b having a tubular and annular shape and provided at a lower end of the cap 10 in Fig. 1, the sub-cylinder 4 is fixed to the cap 10 by welding and is housed in the compression side chamber R2 in the cylinder 1. As described above, an upper end of the sub-cylinder 4 is closed by the cap 10, an outer diameter of the sub-cylinder 4 is smaller than an inner diameter of the cylinder 1, and an annular gap S is formed between the sub-cylinder 4 and the cylinder 1.

Furthermore, a disc-shaped partition wall 4a1 is attached to an inner periphery of the sub-cylinder 4, and the inside of the sub-cylinder 4 is partitioned by the partition wall 4a1 into the hydraulic pressure lock chamber L and the compensation chamber R on the counter piston side of the hydraulic pressure lock chamber L. In the present embodiment, the sub-cylinder 4 is formed using a first tube 4a and a second tube 4b that are connected in an overlapping manner in two axial directions. Specifically, as illustrated in Fig. 1, the sub-cylinder 4 includes the first tube 4a that has a bottomed tubular shape and forms the hydraulic pressure lock chamber L with the partition wall 4a1 as a bottom portion, and the second tube 4b that is fitted to an outer periphery of a bottom portion side end of the first tube 4a and holds the first tube 4a by being swaged from an outer peripheral side to form the compensation chamber R.

The first tube 4a includes the partition wall 4a1 formed using the disc-shaped bottom portion and a cylindrical portion 4a2 having an outer diameter smaller than an outer diameter of the partition wall 4a1 and hanging down from the partition wall 4a1 toward the piston. The first tube 4a is housed in the compression side chamber R2 in the cylinder 1 and forms the hydraulic pressure lock chamber L therein.

The lock piece 31 is movably inserted into the first tube 4a in the axial direction, and the spring 32 that is a conical coil spring is interposed between the lock piece 31 and the partition wall 4a1. A stop ring 4a3 is attached to an inner periphery of a lower end of the cylindrical portion 4a2 in Fig. 1, and the stop ring 4a3 prevents the lock piece 31 from coming off from the hydraulic pressure lock chamber L. The lock piece 31 is biased by the spring 32 and is positioned at a position abutting on the stop ring 4a3 in a state in which the lock piece 31 is separated from the closing body 6 of the piston rod 2.

The lock piece 31 includes a cylindrical portion 31a that is slidably in contact with an inner periphery of the cylindrical portion 4a2 of the first tube 4a in the sub-cylinder 4, an annular inclined portion 31b that protrudes toward the piston rod while being inclined at a certain angle from a lower end of the cylindrical portion 31a in Fig. 1, which is a piston rod side end, toward an inner peripheral side, and the annular seat portion 31c that extends inward from an inner periphery of the inclined portion 31b and is seated on and separated from an upper end of the closing body 6 in Fig. 1, and is movable in the axial direction in the first tube 4a.

In addition, the spring 32 is interposed between an inner side of the inclined portion 31b of the lock piece 31 and the partition wall 4a1 of the first tube 4a, and the lock piece 31 is biased by the spring 32 and positioned at a position abutting on the stop ring 4a3 in a state in which the lock piece 31 is separated from the closing body 6 of the piston rod 2. The spring 32 is a conical coil spring and is interposed in a compressed state between the lock piece 31 and the partition wall 4a1 with a largediameter lower end fitted in an annular groove (with no reference sign) provided along a circumferential direction on an inner periphery of the lock piece 31 and a small-diameter upper end abutting on a lower surface of the partition wall 4a1. Therefore, the spring 32 is positioned in the radial direction with respect to the lock piece 31, and constantly biases the lock piece 31 so as to exit from the hydraulic pressure lock chamber L. Further, since the spring 32 is a conical coil spring and has a shorter overall length at the time of the maximum compression than that of a cylindrical coil spring, a stroke length of the lock piece 31 in the hydraulic pressure lock chamber L can be secured, and an axial length of the hydraulic pressure lock chamber L can be shortened. This does not prevent the spring 32 from being a cylindrical coil spring. Furthermore, the spring 32 may be an elastic body such as a wave washer, a disk spring, or a rubber, in addition to the coil spring, as long as the spring 32 can bias the lock piece 31.

An outer diameter of the cylindrical portion 31a of the lock piece 31 is slightly smaller than an inner diameter of a portion forming the hydraulic pressure lock chamber L of the sub-cylinder 4, that is, an inner diameter of the cylindrical portion 4a2 of the first tube 4a, and the liquid can pass through a gap between an outer periphery of the lock piece 31 and the inner periphery of the cylindrical portion 4a2 while receiving a resistance.

In addition, the lock piece 31 faces the closing body 6 attached to the distal end of the piston rod 2 in the axial direction, and an inner diameter of an opening 31c1 on the inner periphery, which is a hole of the seat portion 31c, is a diameter that can be closed by an upper end surface of the closing body 6 in Fig. 1. Therefore, in a state in which the closing body 6 and the lock piece 31 do not abut on each other, the hydraulic pressure lock chamber L and the compression side chamber R2 communicate with each other through an inner periphery of the seat portion 31c of the lock piece 31 and the gap between the outer periphery of the lock piece 31 and the inner periphery of the cylindrical portion 4a2 of the first tube 4a. However, when the piston rod 2 moves upward in Fig. 1 with respect to the cylinder 1 and the seat portion 31c abuts on the upper end surface of the closing body 6 in Fig. 1, the opening 31c1 on an inner peripheral side of the seat portion 31c is closed by the closing body 6, and the communication between the compression side chamber R2 and the hydraulic pressure lock chamber L via the inner peripheral side of the seat portion 31c is cut off, and thus, the inside of the hydraulic pressure lock chamber L and the compression side chamber R2 communicate with each other only through the narrow gap between the outer periphery of the lock piece 31 and the inner periphery of the cylindrical portion 4a2 of the first tube 4a.

The lock piece 31 of the present embodiment includes the inclined portion 31b between the cylindrical portion 31a and the seat portion 31c, and reduces a stress generated inside by a load received when the closing body 6 abuts on the seat portion 31c. In the case of a structure in which the seat portion 31c is directly connected to an inner periphery of the cylindrical portion 31a without the inclined portion 31b, a shape change of a connection portion between the cylindrical portion 31a and the seat portion 31c is larger than that in a case where the inclined portion 31b is provided. Therefore, by providing the inclined portion 31b as described above, the stress generated in the lock piece 31 is reduced, and fatigue of the lock piece 31 can be reduced even after a long-term use. In addition, even when an inner diameter of the seat portion 31c is reduced to increase a difference between the inner diameter of the seat portion 31c and an outer diameter of the lock piece 31, the fatigue can be reduced by providing the inclined portion 31b, and the outer diameter of the closing body 6 can be reduced. As described above, an outer peripheral shape of the head portion 6b and a shape of the upper end surface in Fig. 1 can be changed as long as the closing body 6 can abut on the seat portion 31c to close the opening 31c1 on the inner periphery of the seat portion 31c.

Then, after the second tube 4b is fitted to the outer periphery of the protrusion 10b having a cylindrical and annular shape and provided at the lower end of the cap 10 in Fig. 2, the second tube 4b is fixed to the cap 10 by welding, is housed in the compression side chamber R2 in the cylinder 1 and forms the compensation chamber R therein. In addition, an inner diameter of a lower end of the second tube 4b in Fig. 2 is larger than that of an upper end, and a step portion 4b1 is provided on an inner periphery and an orifice 4b2 penetrating through a wall in the radial direction is provided closer to the counter piston side than the step portion 4b1. The inner diameter of the lower end of the second tube 4b is set to a diameter that allows the partition wall 4a1 of the first tube 4a to be inserted. An axial length of a portion 4b3 having a large inner diameter in the second tube 4b is longer than an axial length of the partition wall 4a1 of the first tube 4a.

In order to connect the first tube 4a and the second tube 4b configured as described above, a partition wall side end of the first tube 4a is inserted into the lower end of the second tube 4b, and the partition wall 4a1 of the first tube 4a abuts on the step portion 4b1 of the second tube 4b. In this state, the portion 4b3 having a large inner diameter at the lower end of the second tube 4b is swaged from an outer peripheral side as a swaging portion and plastically deformed so as to grip the partition wall 4al, whereby the second tube 4b and the first tube 4a are connected to each other. As described above, when the sub-cylinder 4 is formed using the first tube 4a that has a bottomed tubular shape and forms the hydraulic pressure lock chamber L and the second tube 4b that is fitted to the outer periphery of the partition wall side end of the first tube 4a, is swaged from the outer peripheral side to hold the first tube 4a, and forms the compensation chamber R, a distortion due to welding does not occur between the first tube 4a and the second tube 4b, and inner peripheral surfaces of the first tube 4a and the second tube 4b do not require post-processing. Therefore, the sub-cylinder 4 can be manufactured inexpensively and easily. In addition, since the hydraulic pressure lock chamber L is formed using the first tube 4a having a bottomed tubular shape, there is no concern that the liquid leaks from the inside of the hydraulic pressure lock chamber L to the inside of the compression side chamber R2 via a portion other than a portion between the cylindrical portion 4a2 and the lock piece 31 when a hydraulic pressure lock function is exhibited. As a result, the hydraulic pressure lock function can be stably exhibited. In addition, as the sub-cylinder 4 is formed using the first tube 4a having the partition wall 4a1 and the second tube 4b in this manner, it is possible to liquid-tightly partition the hydraulic pressure lock chamber L and the compensation chamber R without providing a sealing member.

In addition, a free piston 30 that is slidably in contact with an inner periphery of the second tube 4b, is movable in the axial direction, and partitions the inside of the compensation chamber R into a gas chamber G and a liquid chamber A is inserted into the second tube 4b that forms the compensation chamber R on the inner periphery of the sub-cylinder 4. The free piston 30 includes a seal ring 30a that is provided on an outer periphery thereof and is slidably in contact with the inside of the sub-cylinder 4, thereby sealing between the gas chamber G and the liquid chamber A. The gas chamber G is filled with compressed gas, and the liquid chamber A is filled with the same liquid as the liquid filling the extension side chamber R1 and the compression side chamber R2. Note that in the shock absorber D of the present embodiment, the free piston 30 is used to partition the inside of the compensation chamber R into the gas chamber G and the liquid chamber A. However, an elastic partition wall such as a bladder, a diaphragm, or a bellows that can change volume distribution between the gas chamber G and the liquid chamber A may be used.

The orifice 4b2 provided in the second tube 4b is provided below a movement range of the free piston 30 in Fig. 1, allows the compression side chamber R2 and the liquid chamber A of the compensation chamber R to communicate with each other, and applies a resistance to a flow of the liquid moving between the compression side chamber R2 and the liquid chamber A. Note that in the present embodiment, a cross-sectional area of the annular gap S between the sub-cylinder 4 and the cylinder 1 is larger than an opening area of the orifice 4b2, so that the resistance applied by the annular gap S to a flow of the liquid passing through the annular gap S is not larger than a resistance applied by the orifice 4b2 to a flow of the liquid passing through the orifice 4b2. In the present embodiment, the orifice 4b2 applies the resistance to a flow of the liquid flowing back and forth between the compression side chamber R2 and the liquid chamber A of the compensation chamber R, but a passage area of the annular gap S may be reduced to apply the resistance to the flow of the liquid passing through the annular gap S and flowing back and forth between the compression side chamber R2 and the liquid chamber A of the compensation chamber R, and the annular gap S may be used as a restriction passage. In this case, it sufficient if a hole that hardly applies the resistance to the flow of the liquid passing through the sub-cylinder 4 is provided instead of the orifice 4b2 in the second tube 4b to allow the liquid chamber A and the compression side chamber R2 to communicate with each other through the annular gap S.

In addition, even in a case where the liquid in the compensation chamber R leaks from between the first tube 4a and the lower end portion 4b3 serving as the swaging portion of the second tube 4b to the compression side chamber R2, there is no problem since only the liquid chamber A faces a joint portion between the first tube 4a and the second tube 4b, and the liquid chamber A and the compression side chamber R2 are always in a communicating state. Further, there is no influence on the hydraulic pressure lock chamber L since the hydraulic pressure lock chamber L is formed using the inside of the first tube 4a having a bottomed tubular shape.

In addition, as for the holding of the first tube 4a by the second tube 4b, the second tube 4b may hold the first tube 4a by fitting as long as a holding state can be maintained by fitting the second tube 4b to an outer periphery of the first tube 4a.

The shock absorber D is configured as described above, and an operation of the shock absorber D will be described hereinafter. First, an operation in a case where the shock absorber D extends will be described. When the piston rod 2 moves downward in Fig. 1 with respect to the cylinder 1 and the shock absorber D extends, the liquid in the extension side chamber R1 reduced by the piston 3 passes through the extension side passage 3b and moves to the compression side chamber R2 expanded by pushing and opening the extension side leaf valve 7. Since the extension side leaf valve 7 applies the resistance to the flow of the liquid, the pressure in the extension side chamber R1 increases, a difference occurs between the pressure in the extension side chamber R1 and the pressure in the compression side chamber R2, and the shock absorber D generates an extension side damping force that prevents the extension. During the extension of the shock absorber D, the piston rod 2 exits from the inside of the cylinder 1, and thus, in the compression side chamber R2, a shortfall occurs in an amount of the liquid corresponding to a volume by which the piston rod 2 exits from the inside of the cylinder 1. However, the liquid corresponding to the shortfall is supplied from the inside of the liquid chamber A to the inside of the compression side chamber R2 by the free piston 30 being displaced so as to expand the gas chamber G in the sub-cylinder 4. When the needle valve 41 is opened, the liquid can also move from the extension side chamber R1 to the compression side chamber R2 through the bypass passage 40. Therefore, if the needle valve 41 is opened to the maximum to maximize the passage area of the bypass passage 40, the damping force during the extension of the shock absorber D is minimized, and if the needle valve 41 is closed to cut off the bypass passage 40, the damping force is generated only by the extension side leaf valve 7, and the damping force during the extension of the shock absorber D is maximized. In this manner, the damping force during the extension of the shock absorber D can be adjusted between the minimum and the maximum by adjusting an opening degree of the needle valve 41 serving as the damping force adjustment valve.

Conversely, operation in a case where the shock absorber D contracts will be described. When the piston rod 2 moves upward in Fig. 1 with respect to the cylinder 1 and the shock absorber D contracts, the liquid in the compression side chamber R2 contracting by the piston 3 passes through the compression side passage 3c and moves to the extension side chamber R1 expanded by pushing and opening the compression side leaf valve 8. Since the compression side leaf valve 8 applies the resistance to the flow of the liquid, the pressure in the compression side chamber R2 increases, a difference occurs between the pressure in the compression side chamber R2 and the pressure in the extension side chamber R1, and the shock absorber D generates a compression side damping force that prevents the contraction. During the contraction of the shock absorber D, the piston rod 2 enters the cylinder 1, and thus, an amount of the liquid corresponding to a volume by which the piston rod 2 enters the cylinder 1 becomes excessive in the compression side chamber R2. However, the excess of the liquid flows into the liquid chamber A of the compensation chamber R via the orifice 4b2, and the free piston 30 is displaced so as to contract the gas chamber G in the sub-cylinder 4. Note that the compensation chamber R allows the compression side chamber R2 and the liquid chamber A to communicate with each other via the orifice 4b2, and the pressure in the compression side chamber R2 can increase beyond the pressure in the liquid chamber A. Therefore, the shock absorber D is capable of generating a large compression side damping force as compared with a monotube-type shock absorber according to the related art.

When the needle valve 41 is opened, the liquid can also move from the compression side chamber R2 to the extension side chamber R1 through the bypass passage 40. Therefore, if the needle valve 41 is opened to the maximum to maximize the passage area of the bypass passage 40, the damping force during the contraction of the shock absorber D is minimized, and if the needle valve 41 is closed to cut off the bypass passage 40, the damping force is generated by the compression side leaf valve 8 and the orifice 4b2, and the damping force during the contraction of the shock absorber D is maximized. In this manner, the damping force during the contraction of the shock absorber D can be adjusted between the minimum and the maximum by adjusting the opening degree of the needle valve 41 serving as the damping force adjustment valve.

During the contraction of the shock absorber D, when the piston rod 2 moves upward in Fig. 1 with respect to the cylinder 1, the closing body 6 attached to the distal end of the piston rod 2 eventually abuts on the seat portion 31c of the lock piece 31 in the hydraulic pressure lock chamber L. When the closing body 6 abuts on the lock piece 31 in this manner, the opening 31c1 of the seat portion 31c of the lock piece 31 is closed by the closing body 6, and the communication between the hydraulic pressure lock chamber L and the compression side chamber R2 through the opening 31c1 on the inner periphery of the seat portion 31c is cut off. When the piston rod 2 further moves upward in Fig. 1 with respect to the cylinder 1 in this state and the shock absorber D contracts, the lock piece 31 is pressed by the closing body 6 and moves so as to compress the inside of the hydraulic pressure lock chamber L, and the closing body 6 is inserted into the hydraulic pressure lock chamber L. When the closing body 6 abuts on the seat portion 31c of the lock piece 31, the hydraulic pressure lock chamber L and the compression side chamber R2 are in a state of communicating with each other only through the gap between the lock piece 31 and the sub-cylinder 4. Therefore, when the piston rod 2 enters the hydraulic pressure lock chamber L by the movement of the piston rod 2 in the contraction direction with respect to the cylinder 1 and the lock piece 31 pushed by the closing body 6 contracts the hydraulic pressure lock chamber L, the liquid in the hydraulic pressure lock chamber L moves to the compression side chamber R2 through the gap while receiving the resistance. Therefore, the pressure in the hydraulic pressure lock chamber L increases to be equal to or higher than the pressure in the compression side chamber R2, and the piston rod 2 is pressed downward in Fig. 1 together with the lock piece 31 by an action of the pressure in the hydraulic pressure lock chamber L.

When the shock absorber D is displaced toward the contraction side to the vicinity of the stroke end as described above, the closing body 6 abuts on the lock piece 31 to increase the pressure in the hydraulic pressure lock chamber L and exhibit the hydraulic pressure lock function. Therefore, the shock absorber D can generate a larger compression side damping force by adding a resistance force caused by the pressure increase in the hydraulic pressure lock chamber L to the damping force by the compression side leaf valve 8. In addition, since the closing body 6 closes the longitudinal hole 2d of the piston rod 2, the pressure in the hydraulic pressure lock chamber L does not escape to the extension side chamber R1 through the bypass passage 40, and thus, it is possible to adjust the damping force and exhibit the hydraulic pressure lock function to suppress further contraction of the shock absorber D when the shock absorber D contracts to the vicinity of the stroke end.

When the shock absorber D contracts to the vicinity of the stroke end and then extends, the piston rod 2 exits from the inside of the hydraulic pressure lock chamber L, and the lock piece 31 can return to an initial position at which the lock piece 31 abuts on the stop ring 4a3 before the lock piece 31 is biased by the spring 32 to compress the hydraulic pressure lock chamber L.

As described above, the shock absorber D of the present embodiment includes the cylinder 1, the piston rod 2 that is movably inserted into the cylinder 1 in the axial direction, the piston 3 that is connected to the piston rod 2, is movably inserted into the cylinder 1 in the axial direction, and partitions the inside of the cylinder 1 into the extension side chamber R1 and the compression side chamber R2, the extension side leaf valve (extension side damping valve) 7 that applies the resistance to the flow of the liquid from the extension side chamber R1 to the compression side chamber R2, the compression side leaf valve (compression side damping valve) 8 that applies the resistance to the flow of the liquid from the compression side chamber R2 to the extension side chamber R1, the bypass passage 40 that is provided in the piston rod 2, bypasses the extension side leaf valve (extension side damping valve) 7 and the compression side leaf valve (compression side damping valve) 8, and allows the extension side chamber R1 and the compression side chamber R2 to communicate with each other, the needle valve (damping force adjustment valve) 41 provided in the bypass passage 40, the sub-cylinder 4 housed in the compression side chamber R2 in the cylinder 1, the partition wall 4a1 that partitions the inside of the sub-cylinder 4 into the hydraulic pressure lock chamber L and the compensation chamber R on the counter piston side of the hydraulic pressure lock chamber L, the lock piece 31 that has the opening (hole) 31c1 and is movably inserted into the hydraulic pressure lock chamber L in the axial direction in the sub-cylinder 4, and the closing body 6 that is provided at the distal end of the piston rod 2 and closes the opening (hole) 31c1 when abutting on the lock piece 31, in which the compensation chamber R includes the gas chamber G and the liquid chamber A communicating with the compression side chamber R2, the bypass passage 40 is formed to include the longitudinal hole 2d that is opened from the distal end of the piston rod 2, the first lateral hole 2e that is opened from the side of the piston rod 2 and allows the compression side chamber R2 and the longitudinal hole 2d to communicate with each other, and the second lateral hole 2f that is opened from the side of the piston rod 2 and allows the extension side chamber R1 and the longitudinal hole 2d to communicate with each other, and the closing body 6 closes the opening of the longitudinal hole 2d of the piston rod 2.

In the shock absorber D of the present embodiment configured as described above, during the contraction, when the piston rod 2 moves in the contraction direction, and the closing body 6 abuts on the lock piece 31, the opening (hole) 31c1 of the lock piece 31 is closed by the closing body 6, and the lock piece 31 is pushed into the hydraulic pressure lock chamber L. Therefore, the pressure of the hydraulic pressure lock chamber L increases, and a resistance force for suppressing the movement of the piston rod 2 can be added to the damping force during the contraction. In addition, since the closing body 6 closes the longitudinal hole 2d of the piston rod 2, the pressure in the hydraulic pressure lock chamber L does not escape to the extension side chamber R1 through the bypass passage 40. Therefore, it is possible to adjust the damping force and exhibit the hydraulic pressure lock function when the shock absorber D contracts to the vicinity of the stroke end to suppress further contraction of the shock absorber D. Therefore, with the shock absorber D of the present embodiment, it is possible to adjust the damping force and generate a damping force larger than that of the shock absorber according to the related art when the shock absorber D contracts to the vicinity of the stroke end. Additionally, when the shock absorber D configured as described above is used by being interposed between the vehicle body and the wheel of the straddle-type vehicle, so-called bottoming, that is, contracting to the stroke end when the straddle-type vehicle travels on a rough road can be suppressed.

In addition, since the shock absorber D of the present embodiment can generate a large damping force when the shock absorber D contracts to the vicinity of the stroke end, an impact at the time of the maximum contraction can be mitigated without generating a large resilient force by the bump cushion rubber 18, and the bump cushion rubber 18 can be reduced in size and weight. In addition, since the shock absorber D of the present embodiment can generate a large damping force when the shock absorber D contracts to the vicinity of the stroke end, it is unnecessary to compensate for a shortage of the damping force by changing a spring constant as the compression of the suspension spring 26 progresses, so that a structure of the suspension spring 26 is simplified and productivity is improved.

Furthermore, the shock absorber D of the present embodiment includes the lock piece 31 that has the opening (hole) 31b and is movably inserted into the hydraulic pressure lock chamber L in the axial direction in the sub-cylinder 4, the spring 32 that is interposed between the lock piece 31 and the partition wall 4a1 and biases the lock piece 31 toward the piston, and the closing body 6 that is provided at the distal end of the piston rod 2 and closes the opening (hole) 31c1 when abutting on the lock piece 31.

In the shock absorber D configured as described above, the piston rod 2 approaches the sub-cylinder 4 to close the opening (hole) 31c1 of the lock piece 31 that compresses the hydraulic pressure lock chamber L with the closing body 6 provided on a side of the piston rod 2, and the hydraulic pressure lock chamber L can be compressed by the piston rod 2, the closing body 6, and the lock piece 31. Therefore, even if there is a deviation in an axis between the piston rod 2 and the sub-cylinder 4, the hydraulic pressure lock chamber L is compressed to increase the pressure in the hydraulic pressure lock chamber L, so that a desired large compression side damping force can be obtained in the vicinity of the stroke end.

In addition, in the shock absorber D of the present embodiment, when the hydraulic pressure lock chamber L is compressed, the liquid flowing from the hydraulic pressure lock chamber L to the compression side chamber R2 passes through the gap between the lock piece 31 and the sub-cylinder 4, and the pressure in the hydraulic pressure lock chamber L is increased by applying the resistance to the flow of the liquid in the gap. However, the pressure in the hydraulic pressure lock chamber L may be increased by causing the lock piece 31 to be slidably in contact with the inner periphery of the sub-cylinder 4, forming a passage that functions as an orifice or a choke at the lock piece 31, at the closing body 6, between the lock piece 31 and the closing body 6, or at the piston rod 2 instead of the gap, and causing the liquid to pass through the passage. Furthermore, the sub-cylinder 4 may be provided with an orifice or a choke that allows the hydraulic pressure lock chamber L and the compression side chamber R2 to communicate with each other. In addition, although the head portion 6b of the closing body 6 has a disc shape, the shape and structure of the closing body 6 can be appropriately changed as long as the closing body 6 can close the hole 31c1 of the lock piece 31 when abutting on the lock piece 31, and the closing body 6 can compress the hydraulic pressure lock chamber L together with the lock piece 31 when the piston rod 2 enters the hydraulic pressure lock chamber L. Note that even in a case where a groove is provided on one or both of abutment surfaces of the closing body 6 and the lock piece 31 and the groove is caused to function as an orifice or a choke for increasing the pressure in the hydraulic pressure lock chamber L, the opening (hole) 31c1 is not completely closed with the closing body 6 abutting on the lock piece 31. However, even such a case is included in a concept that the closing body 6 closes the opening (hole) 31c1 as long as the function of the hydraulic pressure lock chamber L can be achieved.

Note that the lock piece 31 may be made of metal, but when the lock piece 31 is made of resin, it is possible to reduce a hitting sound when the lock piece 31 abuts on the closing body 6, and it is possible to suppress damage to an inner peripheral surface in the sub-cylinder 4 when the lock piece 31 moves in the sub-cylinder 4.

In addition, in the shock absorber D of the present embodiment, since the sub-cylinder 4 includes the orifice 4b2 that is provided on the side and allows the compression side chamber R2 and the liquid chamber A to communicate with each other, the pressure in the compression side chamber R2 can be made higher than the pressure in the compensation chamber R during the contraction of the shock absorber D, so that the compression side damping force during the contraction can be increased. Therefore, when the shock absorber D configured as described above is used by being interposed between the vehicle body and the wheel of the straddle-type vehicle, the bottoming can be further suppressed when the straddle-type vehicle travels on a rough road.

Further, in the shock absorber D of the present embodiment, the piston 3 has an annular shape, is attached to the outer periphery of the piston rod 2, and includes the extension side passage 3b and the compression side passage 3c that allow the extension side chamber R1 and the compression side chamber R2 to communicate with each other, the extension side damping valve is the annular extension side leaf valve 7 that has the inner periphery fixed to the outer periphery of the piston rod 2, overlaps with a compression side chamber side end of the piston 3, and opens and closes the extension side passage 3b, the compression side damping valve is the annular compression side leaf valve 8 that has the inner periphery fixed to the outer periphery of the piston rod 2, overlaps with an extension side chamber side end of the piston 3, and opens and closes the compression side passage 3c, the piston nut 27 that is screwed to the outer periphery of the piston rod 2 and fixes the piston 3, the extension side leaf valve 7, and the compression side leaf valve 8 to the outer periphery of the piston rod 2 is provided, and the closing body 6 is separated from the piston nut 27.

In the shock absorber D configured as described above, when the shock absorber D contracts to the vicinity of the stroke end, the closing body 6 provided on the piston rod 2 abuts on the lock piece 31 to compress the hydraulic pressure lock chamber L together with the lock piece 31, thereby increasing the pressure in the hydraulic pressure lock chamber L. The pressure in the hydraulic pressure lock chamber L presses the closing body 6 against the piston rod 2 toward the piston 3. However, since the closing body 6 is separated from the piston nut 27, the load in the axial direction applied to the closing body 6 by the pressure in the hydraulic pressure lock chamber L is directly received by the piston rod 2 and does not act on the compression side leaf valve 8, the piston 3, and the extension side leaf valve 7 via the piston nut 27. Therefore, in the shock absorber D of the present embodiment configured as described above, even in a case where the closing body 6 is provided on the piston rod 2, the load in the axial direction received due to the pressure of the hydraulic pressure lock chamber L does not act on the compression side leaf valve 8, the piston 3, and the extension side leaf valve 7. Therefore, the compression side leaf valve 8, the piston 3, and the extension side leaf valve 7 can be prevented from deteriorating, and the extension side and compression side damping forces can be generated as designed.

Furthermore, in the shock absorber D of the present embodiment, the closing body 6 is press-fitted into the longitudinal hole 2d at a position facing the piston nut 27 in the radial direction. In the shock absorber D configured as described above, the diameter of the screw portion 2b of the piston rod 2 to which the piston nut 27 is screwed is expanded by the press fitting of the closing body 6, the piston nut 27 does not slacken by rotation with respect to the screw portion 2b, and thus a component or processing for preventing the rotation of the piston nut 27 is not required, so that a manufacturing cost of the shock absorber D can be reduced.

In the present embodiment, since the closing body 6 includes the insertion shaft 6a that is press-fitted into the longitudinal hole 2d of the piston rod 2 and the head portion 6b that is provided at the distal end of the insertion shaft 6a and abuts on the distal end of the piston rod 2, even when a large load is applied to the closing body 6 due to the action of the pressure of the hydraulic pressure lock chamber L, the movement of the closing body 6 in a direction of further approaching the piston rod 2 is restricted when the head portion 6b abuts on the piston rod 2. Therefore, if the piston nut 27 is screwed to a position separated from the distal end of the piston rod 2 toward the counter sub-cylinder side, it is possible to reliably prevent the load from the closing body 6 from being transmitted to the piston nut 27.

The closing body 6 only needs to be able to close the opening (hole) 31c1 of the seat portion 31c when abutting on the lock piece 31, and thus does not have to include the head portion 6b. In this case, it is sufficient if a step portion capable of abutting on a counter sub-cylinder side end of the closing body 6 is provided in the longitudinal hole 2d of the piston rod 2 to restrict the closing body 6 from entering the piston rod 2 with the stepped portion, so that the entire closing body 6 is not pushed into the piston rod 2 when receiving the load due to the action of the pressure of the hydraulic pressure lock chamber L.

Furthermore, in the shock absorber of the present embodiment, the lock piece 31 includes the cylindrical portion 31a that is slidably in contact with the inner periphery of the sub-cylinder 4, the annular inclined portion 31b that protrudes toward the piston rod while being inclined toward the inner peripheral side from the piston rod side end of the cylindrical portion 31a, and the annular seat portion 31c that extends inward from the inner periphery of the inclined portion 31b and is seated on and separated from the closing body 6. With the shock absorber D configured as described above, a stress generated inside the lock piece 31 due to the load applied when the closing body 6 abuts on the seat portion 31c can be reduced, and the fatigue of the lock piece 31 can be reduced even after a long-term use. Although the inclined portion 31b is inclined at a constant angle with respect to the cylindrical portion 31a as described above, the inclined portion 31b may be inclined by changing the angle stepwise with respect to the cylindrical portion 31a, or may be inclined in a curved form.

In addition, the sub-cylinder 4 in the shock absorber D of the present embodiment includes the bottomedtubular-shaped first tube 4a that has a bottomed tubular shape and forms the hydraulic pressure lock chamber L with the partition wall 4a1 as the bottom portion, and the second tube 4b that is fitted to the outer periphery of the bottom portion side end of the first tube 4a and holds the first tube 4a to form the compensation chamber R. With the shock absorber D configured as described above, since it is not necessary to weld the first tube 4a and the second tube 4b, a distortion due to welding does not occur, and the inner peripheral surfaces of the first tube 4a and the second tube 4b do not required post-processing. Therefore the sub-cylinder 4 can be manufactured inexpensively and easily. In addition, since the hydraulic pressure lock chamber L is formed using the first tube 4a having a bottomed tubular shape, there is no concern that the liquid leaks from the inside of the hydraulic pressure lock chamber L to the inside of the compression side chamber R2 via a portion other than a portion between the first tube 4a and the lock piece 31 when the hydraulic pressure lock function is exhibited. As a result, the hydraulic pressure lock function can be stably exhibited.

Note that vertical arrangement of the gas chamber G and the liquid chamber A in the compensation chamber R may be reversed from that illustrated in Fig. 1. In addition, in the shock absorber D of the present embodiment, the orifice 4b2 that allows the liquid chamber A and the compression side chamber R2 to communicate with each other is provided in the sub-cylinder 4 to assist a pressure increase in the compression side chamber R2 during the contraction. However, the restriction passage that allows the liquid chamber A and the compression side chamber R2 to communicate with each other through a hole that cannot function as an orifice and applies the resistance to the flow of the liquid in the gap between the cylinder 1 and the sub-cylinder 4 may be provided to assist a pressure increase in the compression side chamber R2 during the contraction. However, in a case where the pressure increase in the compression side chamber R2 during the contraction is assisted by the orifice 4b2 whose area can be easily managed, there is an advantage that the pressure in the compression side chamber R2 and the pressure in the liquid chamber A can be easily adjusted.

Furthermore, in the shock absorber D of the present embodiment, since the sub-cylinder 4 is held by the cap 10, each component to be assembled to the sub-cylinder 4 can be assembled to the cap 10 together with the sub-cylinder 4 to form a sub-cylinder assembly, and the shock absorber D can be easily assembled. However, a structure of housing and fixing the sub-cylinder 4 in the cylinder 1 is not limited to the structure illustrated in Fig. 1 and can be modified in design as appropriate.

Note that the first tube forming the hydraulic pressure lock chamber L is formed in a cylindrical shape, the second tube connected to the cap 10 and forming the compensation chamber R is formed in a bottomed tubular shape, the first tube is fitted to the outer periphery of the bottom portion side end of the second tube, the first tube is swaged from the outer peripheral side toward the bottom portion of the second tube, whereby it is also possible to form the sub-cylinder 4 by connecting the first tube and the second tube.

Further, the sub-cylinder 4 is formed by connecting the first tube 4a having a bottomed tubular shape and the second tube 4b having a tubular shape by swaging. However, for example, the sub-cylinder 4 may be formed by connecting two tubes and a partition wall clamped between the tubes by welding, and the structure of the sub-cylinder 4 can be appropriately changed in design.

Although the preferred embodiment of the present invention has been described above in detail, modifications, variations, and changes can be made thereto without departing from the claims.

### Reference Signs List

- 1: Cylinder
- 2: Piston rod
- 2d: Longitudinal hole
- 2e: First lateral hole
- 2f: Second lateral hole
- 3: Piston
- 3b: Extension side passage
- 3c: Compression side passage
- 4: Sub-cylinder
- 4a: First tube
- 4a1: Partition wall
- 4b: Second tube
- 6: Closing body
- 6a: Insertion shaft
- 6b: Head portion
- 7: Extension side leaf valve (extension side damping valve)
- 8: Compression side leaf valve (compression side damping valve)
- 27: Piston nut
- 31: Lock piece
- 31a: Cylindrical portion
- 31b: Inclined portion
- 31c: Seat portion
- 31c1: Opening (hole)
- 32: Spring
- 40: Bypass passage
- 41: Needle valve (damping force adjustment valve)
- A: Liquid chamber
- D: Shock absorber
- G: Gas chamber
- L: Hydraulic pressure lock chamber
- R: Compensation chamber
- R1: Extension side chamber
- R2: Compression side chamber

## Claims

1. A shock absorber comprising:
a cylinder;
a piston rod that is movably inserted into the cylinder in an axial direction;
a piston that is connected to the piston rod, is movably inserted into the cylinder in the axial direction, and partitions an inside of the cylinder into an extension side chamber and a compression side chamber;
an extension side damping valve that applies a resistance to a flow of a liquid from the extension side chamber to the compression side chamber;
a compression side damping valve that applies a resistance to a flow of the liquid from the compression side chamber to the extension side chamber;
a bypass passage that is provided in the piston rod, bypasses the extension side damping valve and the compression side damping valve, and allows the extension side chamber and the compression side chamber to communicate with each other;
a damping force adjustment valve provided in the bypass passage;
a sub-cylinder housed in the compression side chamber in the cylinder;
a partition wall that partitions an inside of the sub-cylinder into a hydraulic pressure lock chamber and a compensation chamber on a counter piston side of the hydraulic pressure lock chamber;
a lock piece that has a hole and is movably inserted into the hydraulic pressure lock chamber in the axial direction in the sub-cylinder; and
a closing body that is provided at a distal end of the piston rod and closes the hole when abutting on the lock piece, wherein
the compensation chamber includes a gas chamber and a liquid chamber communicating with the compression side chamber,
the bypass passage is formed to include a longitudinal hole that is opened from the distal end of the piston rod, a first lateral hole that is opened from a side of the piston rod and allows the compression side chamber and the longitudinal hole to communicate with each other, and a second lateral hole that is opened from the side of the piston rod and allows the extension side chamber and the longitudinal hole communicate with each other, and
the closing body closes an opening of the longitudinal hole of the piston rod.

2. The shock absorber according to claim 1, wherein
the piston has an annular shape, is attached to an outer periphery of the piston rod, and includes an extension side passage and a compression side passage that allow the extension side chamber and the compression side chamber to communicate with each other,
the extension side damping valve is an annular leaf valve that has an inner periphery fixed to the outer periphery of the piston rod, overlaps with a compression side chamber side end of the piston, and opens and closes the extension side passage,
the compression side damping valve is an annular leaf valve that has an inner periphery fixed to the outer periphery of the piston rod, overlaps with an extension side chamber side end of the piston, and opens and closes the extension side passage,
the shock absorber comprises a piston nut that is screwed to the outer periphery of the piston rod and fixes the piston, the extension side leaf valve, and the compression side leaf valve to the outer periphery of the piston rod, and
the closing body is separated from the piston nut.

3. The shock absorber according to claim 2, wherein
the closing body is press-fitted into the longitudinal hole at a position facing the piston nut in a radial direction.

4. The shock absorber according to claim 1, wherein
the lock piece includes a cylindrical portion that is slidably in contact with an inner periphery of the sub-cylinder, an annular inclined portion that protrudes toward the piston rod while being inclined toward an inner peripheral side from a piston rod side end of the cylindrical portion, and an annular seat portion that extends inward from an inner periphery of the inclined portion and is seated on and separated from the closing body.

5. The shock absorber according to claim 1, wherein
the closing body includes an insertion shaft that is inserted into the longitudinal hole, and a head portion that is provided at a distal end of the insertion shaft and abuts on the distal end of the piston rod.

6. The shock absorber according to claim 1, wherein
the sub-cylinder includes a bottomed-tubular-shaped first tube that has a bottomed tubular shape and forms the hydraulic pressure lock chamber with the partition wall as a bottom portion, and a second tube that is fitted to an outer periphery of a bottom portion side end of the first tube and holds the first tube to form the compensation chamber.
